# EUROPÄISCHE PATENTANMELDUNG

(11) **EP 1 950 095 A2**
(43) Veröffentlichungstag der Anmeldung: **30.07.2008**
(21) Anmeldenummer: 08001373.3
(22) Anmeldetag: 25.01.2008
(51) Int. Cl.: B60R 13/02, B27D 1/00, B32B 21/14, B29C 39/00, B29C 70/78

(54) **Halbzeug zur Herstellung von Oberflächenüberzügen und Verfahren zu seiner Herstellung**

(30) Priorität: 25.01.2007 DE 102007003687
(71) Anmelder: von Löbbecke, Bernd, 82110 Germering (DE)
(72) Erfinder: von Löbbecke, Bernd, 82110 Germering (DE)
(74) Vertreter: Kohler Schmid Möbus

(57) **Zusammenfassung**

Ein Halbzeug zur Herstellung von Oberflächenüberzügen, insbesondere für Möbel und Verkleidungs- und Verzierurigsteile, mit einer Dekorschicht (11), insbesondere einem Holzfurnier, und einer die Dekorschicht (11) auf der Sichtseite mindestens teilweise abdeckenden Beschichtung (12), wobei die Dekorschicht (11) und die Beschichtung (12) fest haftend miteinander verbunden sind und das Halbzeug (10) insbesondere durch Zufuhr von Wärme entsprechend der Kontur des zu überziehenden Gegenstandes formbar ist, sowie Verfahren zur Herstellung des Halbzeugs (10).

## Beschreibung

Möbeloberflächen oder Verkleidungen und Verzierungsteile werden häufig mit einer Dekorschicht, beispielsweise einem Holzfurnier, versehen, um das gewünschte Erscheinungsbild zu erreichen. Die Dekorschicht wird anschließend in aller Regel mit einer Beschichtung versehen, die die Dekorschicht vor Beschädigungen schützt und ihre Struktur hervorhebt. Als Beschichtung kommen insbesondere Lacke in Frage, die auf die Dekorschicht aufgetragen oder ausgesprüht werden. Auch Folien können als Beschichtung aufgebracht werden. Zur Herstellung der Oberflächenveredelung der Möbel oder Verkleidungsteile sind somit zwei Arbeitsschritte erforderlich, das Aufbringen der Dekorschicht und anschließend die Herstellung der Beschichtung beispielsweise durch Lackieren. Weisen die Möbel oder Verkleidungsteile eine kompliziertere räumliche Struktur auf, so gestalten sich diese Arbeitsschritte relativ zeitaufwändig.

Der vorliegenden Erfindung liegt die Aufgabe zugrunde, eine Möglichkeit zu schaffen, Gegenstände auf rationelle Art mit einem gewünschten Oberflächenüberzug versehen zu können.

Die Aufgabe wird mit einem Halbzeug zur Herstellung von Oberflächenüberzügen, insbesondere für Möbel, Verkleidungs- und Verzierungsteile, gelöst, mit einer Dekorschicht, insbesondere einem Holzfurnier, und einer die Dekorschicht auf der Sichtseite mindestens teilweise abdeckenden Beschichtung, wobei die Dekorschicht und die Beschichtung fest haftend miteinander verbunden sind und das Halbzeug insbesondere durch Zufuhr von Wärme entsprechend der Kontur des zu überziehenden Gegenstandes formbar ist.

In dem erfindungsgemäßen Halbzeug sind die Dekorschicht und die diese abdeckende Beschichtung bereits zu einer Einheit zusammengefügt. Die Verbindung von Beschichtung und Dekorschicht kann bei dem Halbzeug ohne Rücksicht auf die Kontur des zu überziehenden Gegenstandes einfacher und kostengünstiger erfolgen als am zu überziehenden Gegenstand selbst. Handelt es sich bei dem zu überziehenden Gegenstand um einen dreidimensionalen Körper, so lässt sich das Halbzeug entsprechend der Kontur des Gegenstandes formen, wobei der Gegenstand selbst als Form dienen kann und gleichzeitig mit dem Formen des Halbzeugs auch die Verbindung mit dem Gegenstand beispielsweise durch Verkleben oder thermisches Verpressen hergestellt werden kann.

Insbesondere wenn mehrere unterschiedlich geformte Gegenstände mit dem gleichen Oberflächenüberzug versehen werden sollen, lohnt sich die Verwendung eines erfindungsgemäßen Halbzeugs, aus dem dann die Überzüge für die einzelnen Gegenstände hergestellt werden können.

Als Beschichtung des Halbzeugs kommen wie bei den herkömmlichen Oberflächenüberzügen auch verschiedene Materialien infrage. Vorzugsweise kann die Beschichtung eine Lack-, Kunststoff- oder Kunstharzschicht aufweisen.

Die Beschichtung kann auch unter Verwendung eines unter UV-Bestrahlung aushärtenden Materials hergestellt sein. Dies ermöglicht die Herstellung der Beschichtung auch in einem Gießverfahren,

Die Beschichtung kann zunächst in flüssiger Form aufgebracht werden oder aber auch bereits als Folie vorliegen, die mit der Dekorschicht verbunden wird.

Damit die Dekorschicht optimal zur Geltung kommt, ist es von Vorteil, wenn die Beschichtung transparent ist. Auch die Dekorschicht kann jedoch prinzipiell transparent sein, wenn die Oberfläche des zu überziehenden Gegenstandes noch sichtbar und durch die Dekorschicht beispielsweise nur im Farbton verändert werden soll.

Durch eine entsprechende Oberflächengestaltung der Beschichtung können zusätzliche optische Effekte erzielt werden. So kann die Beschichtung beispielsweise eine glatte oder strukturierte, insbesondere eine matte, aufgeraute oder geriffelte Oberfläche aufweisen.

Bei besonders dünnen oder empfindlichen Dekorschichten ist es weiter von Vorteil, wenn die Dekorschicht auf einem Trägermaterial, insbesondere einem Gewebe, aufgebracht ist.

Das Trägermaterial kann jedoch auch durch das Beschichtungsmaterial gebildet sein. Auch dadurch lässt sich die Stabilität des Halbzeugs insgesamt erhöhen.

Bei einer bevorzugten Ausgestaltung kann das Halbzeug je nach seiner Dicke und seiner Flexibilität als flächige Platten-, Blatt- oder Bandware herstellbar sein. Diese relativ großformatige Herstellung des Halbzeugs ist kostengünstig und ermöglicht eine einfache Handhabung des Halbzeugs in der Weiterverarbeitung zu einem Oberflächenüberzug.

Zur Formung des Halbzeugs entsprechend dem zu überziehenden Gegenstand kommen verschiedene Verfahren in Betracht. Bevorzugt kann das Halbzeug durch Heißpressen oder Tiefziehen formbar sein, wenn dreidimensionale Gegenstände überzogen werden sollen. Diese Verfahren lassen sich auch mit dem Verbinden des Halbzeugs mit dem zu überziehenden Gegenstand kombinieren. Dieses Verbinden kann beispielsweise mittels einer Verbindungsschicht, durch Verkleben und/oder Verpressen oder durch einen Tiefziehvorgang erfolgen.

Es ist allerdings auch möglich, das Halbzeug so auszugestalten, dass es auf der der Beschichtung abgewandten Seite mit Kunststoff hinterspritzbar ist und der Kunststoff eine Verbindung zum zu überziehenden Gegenstand oder den zu überziehenden Gegenstand selbst bildet. Bildet der Kunststoff den Gegenstand selbst, so übernimmt das vorgeformte Halbzeug letztlich die Funktion einer Gießform für den Gegenstand.

Prinzipiell lassen sich die erfindungsgemäßen Halbzeuge in beliebigen Dicken herstellen. Bevorzugt weisen sie jedoch eine Dicke von 0,8 mm bis 3 mm auf. Dabei kann die Beschichtung vorzugsweise eine Dicke von 0,3 mm bis 0,8 mm aufweisen.

Bei einem ersten erfindungsgemäßen Verfahren zur Herstellung eines erfindungsgemäßen Halbzeugs werden ein flächiges Dekorschicht-Material und ein flächiges Beschichtungsmaterial, von denen mindestens eines thermoplastisch ist, übereinander gelegt und unter Wärmeeinwirkung miteinander verpresst. Das thermoplastische Material wird dabei zumindest angeschmolzen und bildet nach dem Erstarren eine fest haftende Verbindung mit der anderen Schicht.

Für eine besonders rationelle Fertigung eines dünnen flexiblen Halbzeugs können dabei das Dekorschicht-Material und das Beschichtungsmaterial als Bahnen übereinander liegend in eine beheizbare Presse eingeführt werden. Das Halbzeug mit der fest auf der Dekorschicht aufgebrachten Beschichtung verlässt die Presse dann als Bandware, die entweder aufgerollt oder durch einen Stanz- oder Schneidvorgang in blattförmige Einzelteile zertrennt werden kann. Bei diesem Verfahren kann die Beschichtung zweckmäßigerweise aus einer Kunststofffolie hergestellt werden.

Nach einem zweiten erfindungsgemäßen Verfahren zur Herstellung eines erfindungsgemäßen Halbzeugs wird eine Dekorschicht oder eine auf einem Trägermaterial angeordnete Dekorschicht in eine Gießform eingelegt oder mit einer solchen verspannt, derart, dass mindestens zwischen der Sichtseite der Dekorschicht und der Gießform ein Hohlraum entsteht, in den flüssiges Beschichtungsmaterial eingefüllt und anschließend ausgehärtet wird. Dieses Verfahren ermöglicht die Herstellung einer sehr homogenen Beschichtung ohne Einschlüsse. Je nach Gestaltung der Oberfläche der Gießform erhält die Beschichtung eine glatte oder strukturierte Oberfläche. Zur Beschleunigung des Verfahrens und zur Vermeidung des Entstehens von Gasblasen in der Beschichtung kann das Beschichtungsmaterial in den Hohlraum eingepresst werden. Zusätzlich oder alternativ kann der Hohlraum vor dem Einfüllen des Beschichtungsmaterials evakuiert werden. Auch dadurch wird das rasche und gleichmäßige Ausfüllen des Hohlraums und die Vermeidung von Gasblasen unterstützt.

Als Beschichtungsmaterial eignen sich für dieses Verfahren flüssige Materialien, die physikalisch oder chemisch aushärten. Bevorzugt kann als Beschichtungsmaterial ein flüssiges Kunstharz eingefüllt und anschließend einer UV-Strahlung ausgesetzt und dadurch ausgehärtet werden. Solche unter UV-Strahlung aushärtenden Kunstharze können beispielsweise Kunstharze auf Polyurethan-, Polyester- oder Acrylbasis sein.

Nachfolgend wird ein bevorzugtes Ausführungsbeispiel eines erfindungsgemäßen Halbzeugs sowie zweier Verfahren zu seiner Herstellung anhand der Zeichnung näher beschrieben.

Es zeigen:
- Fig. 1: einen Schnitt durch ein erfindungsgemäßes Halbzeug;
- Fig. 2: eine Prinzipdarstellung eines ersten Verfahrens zur Herstellung eines Halbzeugs gemäß Fig. 1;
- Fig. 3: eine Prinzipdarstellung eines zweiten Verfahrens zur Herstellung eines Halbzeugs gemäß Fig. 1.

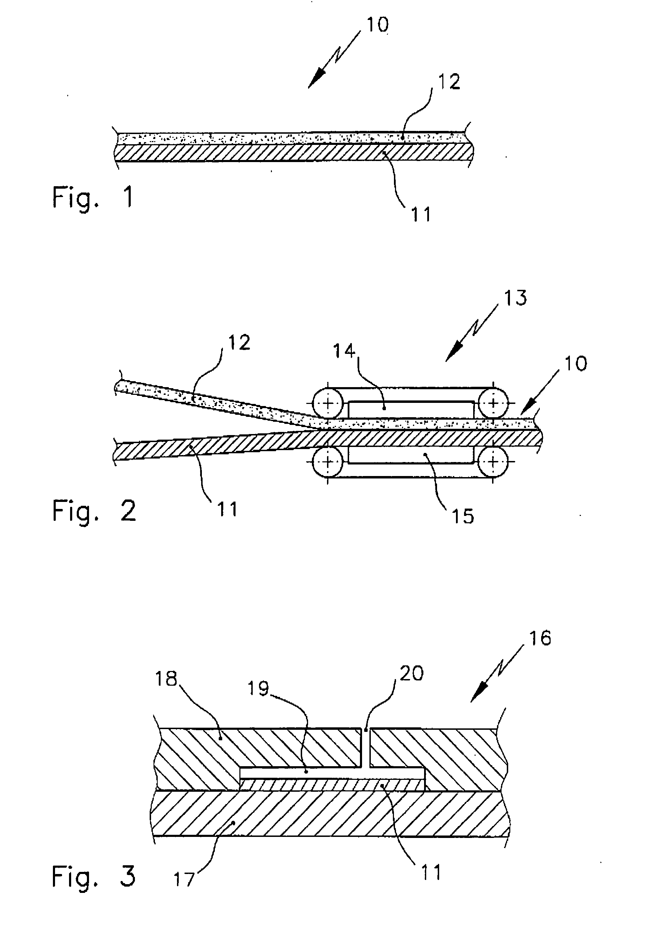

Fig. 1 zeigt ein Halbzeug 10, das eine Dekorschicht 11 und eine Beschichtung 12 aufweist, wobei die Dekorschicht 11 und die Beschichtung 12 fest aneinander haften. Die Dekorschicht 11 kann beispielsweise ein Holzfurnier oder eine Kunststofffolie sein. Die Beschichtung ist vorzugsweise transparent und lässt sich beispielsweise aus einem Lack oder einem Kunstharz herstellen. Im dargestellten Beispiel ist die Dekorschicht 11 dicker eingezeichnet als die Beschichtung 12. Die Dickenverhältnisse könnten jedoch auch umgekehrt sein. Eine dünne Dekorschicht, beispielsweise ein bedrucktes Papier, wird von einer dickeren transparenten Kunststofffolie als Beschichtung abgedeckt. Handelt es sich bei der Dekorschicht 11 um ein empfindliches Material, so kann die Dekorschicht 11 auch auf einem Trägermaterial, beispielsweise einem Gewebe, angeordnet werden.

Das Halbzeug 10 kann formstabil oder flexibel sein. Ist es formstabil, so kann es als plattenförmiges Material gefertigt werden. Andernfalls ist eine Fertigung als Einzelblätter oder auch in Form eines aufwickelbaren Bandes möglich. Zur Herstellung eines Oberflächenüberzugs für einen dreidimensionalen Gegenstand kann das Halbzeug 10 anschließend entsprechend der Kontur des Gegenstands geformt und auf den Gegenstand aufgebracht werden. Zum Überziehen flächiger Gegenstände, beispielsweise von Möbeltüren, ist kein weiterer Formvorgang für das Halbzeug 10 nötig. Es kann unmittelbar mit dem zu überziehenden Gegenstand verbunden werden.

Fig. 2 illustriert ein mögliches Fertigungsverfahren eines Halbzeugs 10 gemäß Figur 1. Die Dekorschicht 11 und die Beschichtung 12 liegen hier als flexible, vorzugsweise folienartige Bänder vor, die von hier nicht dargestellten Rollen abgezogen werden können und einer Bandpresse 13 zugeführt werden, wobei die Bandpresse 13 beheizbare Stempel 14, 15 aufweist. In der Bandpresse 13 werden die Dekorschicht 11 und die Beschichtung 12 thermisch miteinander verpresst, sodass eine fest haftende Verbindung zwischen den beiden Schichten 11, 12 entsteht. Nach der Presse 13 tritt das fertige Halbzeug 10 als Band aus, das zu Einzelblättern zugeschnitten oder aufgerollt werden kann. Selbstverständlich lassen sich auch formstabile Dekorschichten 11 und/oder Beschichtungen 12 thermisch miteinander verpressen. Die Schichten 11, 12 können auch als bereits zugeschnittene Teile vorliegen, die übereinander liegend in eine Presse eingelegt und thermisch verpresst werden.

In Fig. 3 ist ein alternatives Herstellungsverfahren für ein Halbzeug 10 dargestellt. Hier wird die Dekorschicht 11 in eine Gießform 16, die zwei Formhälften 17, 18 aufweist, eingelegt. Dabei liegt die Dekorschicht 11 mit ihrer Unterseite unmittelbar an der ersten Formhälfte 17 an. Nach Schließen der Gießform 16 bildet die zweite Formhälfte 18 oberhalb der Sichtseite der Dekorschicht 11 einen Hohlraum 19 aus, in den über eine Öffnung 20 flüssiges Beschichtungsmaterial vorzugsweise unter Druck einfüllbar ist, damit sich das Beschichtungsmaterial gleichmäßig verteilt und das Ausbilden von Gasblasen vermieden wird. Das Beschichtungsmaterial wird anschließend ausgehärtet. Danach kann das fertige Halbzeug 10 der Gießform 16 entnommen werden.

Wird für das Beschichtungsmaterial ein Material verwendet, das unter UV-Bestrahlung aushärtet, so können mindestens teilweise transparente Gießformen 16 verwendet und die Bestrahlung durch die Gießform 16 hindurch ausgeführt werden.

Im dargestellten Beispiel ist der Hohlraum 19 spaltförmig und mit konstanter Höhe ausgebildet. Dadurch entsteht eine gleichmäßige Beschichtung auf der Dekorschicht 11. Ist die den Hohlraum 19 begrenzende Oberfläche der Formteilhälfte 18 glatt, so erhält auch die Beschichtung 12 eine glatte und glänzende Oberfläche. Durch entsprechende Strukturierung der Oberfläche der Formteilhälfte 18 im Bereich des Hohlraums kann die Beschichtung 12 auf einfache Weise auch mit einer matten oder geriffelten Oberfläche versehen werden.

## Patentansprüche

1. Halbzeug zur Herstellung von Oberflächenüberzügen, insbesondere für Möbel und Verkleidungs- und Verzierungsteile, mit einer Dekorschicht (11), insbesondere einem Holzfurnier, und einer die Dekorschicht (11) auf der Sichtseite mindestens teilweise abdeckenden Beschichtung (12), wobei die Dekorschicht (11) und die Beschichtung (12) fest haftend miteinander verbunden sind und das Halbzeug (10) insbesondere durch Zufuhr von Wärme entsprechend der Kontur des zu überziehenden Gegenstandes formbar ist.

2. Halbzeug nach Anspruch 1, **dadurch gekennzeichnet, dass** die Beschichtung (12) eine Lack-, Kunststoff- oder Kunstharzschicht aufweist.

3. Halbzeug nach Anspruch 1 oder 2, **dadurch gekennzeichnet, dass** die Beschichtung (12) unter Verwendung eines durch UV-Strahlung aushärtenden Materials hergestellt ist.

4. Halbzeug nach einem der vorhergehenden Ansprüche, **dadurch gekennzeichnet, dass** mindestens die Beschichtung (12) eine Folie ist.

5. Halbzeug nach einem der vorhergehenden Ansprüche, **dadurch gekennzeichnet, dass** mindestens die Beschichtung (12) transparent ist.

6. Halbzeug nach einem der vorhergehenden Ansprüche, **dadurch gekennzeichnet, dass** die Beschichtung (12) eine glatte oder strukturierte, insbesondere eine matte oder geriffelte Oberfläche aufweist.

7. Halbzeug nach einem der vorhergehenden Ansprüche, **dadurch gekennzeichnet, dass** die Dekorschicht (11) auf einem Trägermaterial, insbesondere einem Gewebe, aufgebracht ist.

8. Halbzeug nach Anspruch 7, **dadurch gekennzeichnet, dass** das Trägermaterial durch das Beschichtungsmaterial gebildet ist.

9. Halbzeug nach einem der vorhergehenden Ansprüche, **dadurch gekennzeichnet, dass** es als flächige Platten-, Blatt- oder Bandware herstellbar ist.

10. Halbzeug nach einem der vorhergehenden Ansprüche, **dadurch gekennzeichnet, dass** es durch Heißpressen oder Tiefziehen formbar ist.

11. Halbzeug nach einem der vorhergehenden Ansprüche, **dadurch gekennzeichnet, dass** es mittels einer Verbindungsschicht, durch Verkleben und/oder Verpressen oder durch einen Tiefziehvorgang mit dem zu überziehenden Gegenstand verbindbar ist.

12. Halbzeug nach einem der vorhergehenden Ansprüche, **dadurch gekennzeichnet, dass** es auf der der Beschichtung (12) abgewandten Seite mit Kunststoff hinterspritzbar ist und der Kunststoff eine Verbindung zum zu überziehenden Gegenstand oder den zu überziehenden Gegenstand selbst bildet.

13. Halbzeug nach einem der vorhergehenden Ansprüche, **dadurch gekennzeichnet, dass** es eine Dicke von 0,8 mm bis 3 mm aufweist.

14. Halbzeug nach einem der vorhergehenden Ansprüche, **dadurch gekennzeichnet, dass** die Beschichtung (12) eine Dicke von 0,3 mm bis 0,8 mm aufweist.

15. Verfahren zur Herstellung eines Halbzeugs nach einem der Ansprüche 1 bis 14, **dadurch gekennzeichnet, dass** ein flächiges Dekorschicht-Material und ein flächiges Beschichtungsmaterial, von denen mindestens eines thermoplastisch ist, übereinander gelegt und unter Wärmeeinwirkung miteinander verpresst werden.

16. Verfahren nach Anspruch 15., **dadurch gekennzeichnet, dass** das Dekorschicht-Material und das Beschichtungsmaterial als Bahnen übereinander liegend in eine beheizbare Presse (13) eingeführt werden.

17. Verfahren nach Anspruch 15 oder 16, **dadurch gekennzeichnet, dass** die Beschichtung (12) aus einer Kunststofffolie hergestellt wird.

18. Verfahren zur Herstellung eines Halbzeugs nach einem der Ansprüche 1 bis 14, **dadurch gekennzeichnet, dass** eine Dekorschicht (11) oder eine auf einem Trägermaterial angeordnete Dekorschicht (11) in eine Gießform (16) eingelegt oder mit einer solchen verspannt wird, derart, dass mindestens zwischen der Sichtseite der Dekorschicht (11) und der Gießform (16) ein spaltartiger Hohlraum (19) entsteht, in den flüssiges Beschichtungsmaterial eingefüllt und anschließend ausgehärtet wird.

19. Verfahren nach Anspruch 18, **dadurch gekennzeichnet, dass** das Beschichtungsmaterial in den Hohlraum (19) eingepresst wird.

20. Verfahren nach Anspruch 18 oder 19, **dadurch gekennzeichnet, dass** der Hohlraum (19) vor dem Einfüllen des Beschichtungsmaterials evakuiert wird.

21. Verfahren nach einem der Ansprüche 18 bis 20, **dadurch gekennzeichnet, dass** als Beschichtungsmaterial ein flüssiges Kunstharz eingefüllt und anschließend einer UV-Strahlung ausgesetzt und **dadurch** ausgehärtet wird.
